# EUROPÄISCHE PATENTSCHRIFT

(11) **EP 0 820 715 B1**
(45) Veröffentlichungstag und Bekanntmachung des Hinweises auf die Patenterteilung: **23.12.1998**
(21) Anmeldenummer: 96111797.5
(22) Anmeldetag: 22.07.1996
(51) Int. Cl.: A47J 31/46, A47J 31/44

(54) **Kaffeemaschine**
Coffee machine
Machine à café

(43) Veröffentlichungstag der Anmeldung: 28.01.1998
(73) Patentinhaber: WMF WÜRTTEMBERGISCHE METALLWARENFABRIK AG, 73309 Geislingen/Steige (DE)
(72) Erfinder: Bauer, Ewald, 73312 Geislingen/Stg.-Weiler (DE); Boos, Reinhard, 73312 Geislingen/Stg. (DE); Riethmüller, Gert, 73312 Geislingen/Stg. (DE)
(74) Vertreter: Grünecker, Kinkeldey, Stockmair & Schwanhäusser Anwaltssozietät

(56) Entgegenhaltungen:
- EP-A- 0 480 928
- CH-A- 685 597
- DE-A- 3 942 169
- US-A- 1 800 368

## Beschreibung

Die Erfindung bezieht sich auf eine Kaffeemaschine der im Oberbegriff von Anspruch 1 erläuterten Art.

Eine Kaffeemaschine dieser Art ist in der CH-A-685 597 beschrieben. Die bekannte Kaffeemaschine enthält eine Auslaßeinheit, in der eine Vielzahl von Auslauföffnungen zusammengefaßt sind. So enthält die Auslaßeinheit beispielsweise einen Auslaß für Milchschaum, einen Auslaß für Kaffee, einen Auslaß für heiße Milch und einen Auslaß für heißes Wasser. Alle Auslässe münden mit ihrem vollen Rohrquerschnitt, wobei der Auslaß für Milchschaum zentral und die anderen Auslauföffnungen entlang eines Halbkreisbogens um den Umfang der Milchschaumöffnung herum angeordnet sind. Da die Tasse während des Befüllvorganges nicht von ihrem Platz bewegt wird, selbst wenn Milchschaum und Kaffee gleichzeitig und/oder nacheinander in die gleiche Tasse gefüllt werden sollen, wird zumindest eine der Flüssigkeiten asymmetrisch in die Tasse gebracht, so daß der Milchschaum entweder durch das asymmetrische Einfüllen und/oder durch die nur einseitig auftretenden Turbulenzen des einfließenden Kaffees an einer Seite der Tasse konzentriert wird.

Eine aus der EP-A-480 928 bekannte Maschine ist als Espressomaschine mit integrierter Milchaufschäumung zur Cappuccino-Bereitung ausgelegt, ist jedoch auch in der Lage, heiße Milch auszugeben. Die bekannte Maschine weist einen Kaffee- und Milchauslauf auf, aus denen Kaffee und Milchschaum gleichzeitig in das gleiche Gefäß ausgegeben werden können. Der Kaffeeauslauf ist auf der dem Benutzer zugewandten Seite der Kaffeemaschine angeordnet und der Milchauslauf liegt dahinter und ist somit für den Benutzer nicht unmittelbar sichtbar. Beide Ausläufe sind konstruktiv völlig getrennt ausgebildet und jeweils einzeln mit ihren einzelnen Bestandteilen in der Kaffeemaschine untergebracht. Dadurch müssen sie auch einzeln aus der Kaffeemaschine ausgebaut und wieder eingebaut werden, was die Reinigung erschwert und weiterhin einen erhöhten konstruktiven Aufwand bedeutet. Auch erschwert der Abstand und die Anordnung der beiden Ausläufe das Positionieren der Tasse.

Auf dem Markt ist weiterhin eine Kaffeemaschine erhältlich, die einen Kaffee-Doppelauslauf und einen Milch-Doppelauslauf aufweist. Die Kaffeeausläufe des Doppelauslaufs sind so eng beieinander angeordnet, daß sowohl eine einzelne größere als auch zwei eng nebeneinandergestellte Tassen befüllt werden können. In gleicher Weise ist der Milchauslauf angeordnet. Bei dieser Maschine liegt der Doppel-Kaffeeauslauf hinten und der Doppel-Milchauslauf vorn, gesehen vom Benutzer her. Aber auch hier sind beide Doppelausläufe völlig getrennt voneinander konstruktiv ausgebildet und eingebaut. Darüber hinaus wird beim bekannten Doppel-Milchauslauf der Milchschaum durch ein Dachprisma in die einzelnen Ausläufe geteilt. Es hat sich jedoch herausgestellt, daß der Milchschaum nicht exakt in zwei gleich große Portionen getrennt werden kann, so daß die Gefahr besteht, daß aus dem einen oder dem anderen Einzelauslauf eine kleinerer Milchschaummenge austritt. Darüber hinaus erfordert die Benutzung der bekannten Kaffeemaschine mit den beiden Doppelausläufen eine noch größere Aufmerksamkeit beim Plazieren der Tassen, da ein geringfügiges Verschieben der Tassen aus ihrer korrekten Befüllposition dazu führen kann, daß ein Teil des Getränks völlig daneben fließt oder am Tassenrand außen herunterläuft.

Aus der US-A-2 827 845 ist weiterhin eine Kaffeemaschine mit einem Kaffee- und einem Milchauslauf ersichtlich, die eng nebeneinander angeordnet, jedoch als Teil eines Mischventils ausgebildet sind.

Der Erfindung liegt somit die Aufgabe zugrunde, eine Kaffeemaschine der genannten Art konstruktiv zu vereinfachen, und hinsichtlich ihrer Funktion, ihrer Bedienbarkeit und ihrer Reinigungsmöglichkeit zu verbessern.

Die Aufgabe wird durch die kennzeichnenden Merkmale des Anspruchs 1 gelöst.

Durch die erfindungsgemäße Ausgestaltung können Kaffeeauslauf und Milchauslauf gemeinsam gereinigt und so eng benachbart angeordnet werden, daß keine erhöhte Vorsicht beim Positionieren der Tassen notwendig ist. Die erforderlichen Anschlüssen werden vereinfacht, so daß die Anzahl der zu montierenden Teile der Kaffeemaschine verringert werden kann. Durch die koaxiale Anordnung hat der Benutzer einen sicheren Anhaltspunkt, wo er seine Tasse unterzustellen hat. Durch die Anordnung des Milchauslaufes außen um den Kaffeeauslauf herum kann sich der Milchschaum besonders gut auf der Kaffee oberfläche verteilen.

Die in Anspruch 2 beschriebenen Stege wirken als Leitschaufeln, die die Drehbewegung (Drall) der Milch bremsen und somit ein Verspritzen verhindern oder verringern.

Durch die Ausgestaltung nach Anspruch 3 wird die Sauberhaltung der Maschine weiter vereinfacht, da durch die tiefergelegte Ausmündung des Kaffeeauslaufs verhindert wird, daß dieser durch Milchreste verklebt.

Die schräg verlaufende Mündungsöffnung für den Milchauslauf gemäß Anspruch 4 bewirkt, daß insbesondere aufgeschäumte Milch an einer exakt lokalisierbaren Stelle des Milchauslaufs abtropft, so daß die korrekte Position der Tassen für den Benutzer besser lokalisierbar sind.

Die konstruktive Ausgestaltung wird noch weiter vereinfacht, wenn gemäß Anspruch 5 auch die zum Aufschäumen der Milch notwendige Emulgierkammer in die Auslaßeinheit intergriert wird.

Durch die Ausgestaltung nach Anspruch 6 wird einerseits eine kompakte Ausbildung der Auslaßeinheit erreicht, andererseits wird dadurch die Emulgierkammer ringförmig, so daß der Schaum besser abgeleitet werden kann.

Die erfindungsgemäße Ausgestaltung zeigt besondere Vorteile hinsichtlich eines kompakten, konstruktiv einfachen Aufbaus, einer guten Reinigungsmöglichkeit und einer einfachen Bedienung, wenn in der Auslaßeinheit gemäß Anspruch 7 zwei Milchausläufe und zwei Kaffeeausläufe zusammengefaßt sind.

Auch bei diesen Doppelausläufen ist es zweckmäßig, gemäß Anspruch 8, die Emulgierkammer in die Auslaßeinheit zu integrieren, wobei jedoch zwei Emulgierkammern eine für jeden Milchauslauf, vorgesehen und mit einer gemeinsamen Mischeinrichtung verbunden sind. Auf diese Weise wird erreicht, daß die Milch wesentlich exakter in zwei gleich große Volumeneinheiten getrennt wird, als dies geschehen könnte, wenn der fertig aufgeschäumte Milchschaum getrennt würde.

Zweckmäßigerweise geschieht die Trennung durch den in Anspruch 9 beschriebenen Verteiler in Form eines Prismas.

Die Konstruktion der Auslaßeinheit wird noch kompakter und weiter verbessert, wenn gemäß Anspruch 10 in die Auslaßeinheit auch eine Kaffeeverteilkammer integriert und gemäß An - spruch 11 angeordnet ist, die den Kaffee in die beiden Kaffeeausläufe leitet.

Durch ihre kompakte, konstruktive Ausgestaltung kann die Auslaßeinheit gemäß Anspruch 12 zum Reinigen insgesamt abgenommen werden, so daß umständliche Abschrauben einzelner, kleiner Teile, wie dies im Stand der Technik notwendig ist, die meist noch nicht einmal gut zugänglich sind, nicht mehr notwendig ist.

Durch die in Anspruch 13 beschriebene Auswurfeinrichtung wird der Ausbau zu Reinigungszwecken noch weiter erleichtert.

Ein Ausführungsbeispiel der Erfindung wird nachfolgend anhand der Zeichnungen näher erläutert. Es zeigen:
- Fig. 1: eine schematische Darstellung einer erfindungsgemäß ausgerüsteten Kaffeemaschine,
- Fig. 2: eine Vorderansicht einer Auslaßeinheit der erfindungsgemäßen Kaffeemaschine nach Fig. 1 im Längsschnitt,
- Fig. 3: eine Seitenansicht der Auslaßeinheit im Längsschnitt, und
- Fig. 4: den Schnitt IV-IV aus Fig. 3.

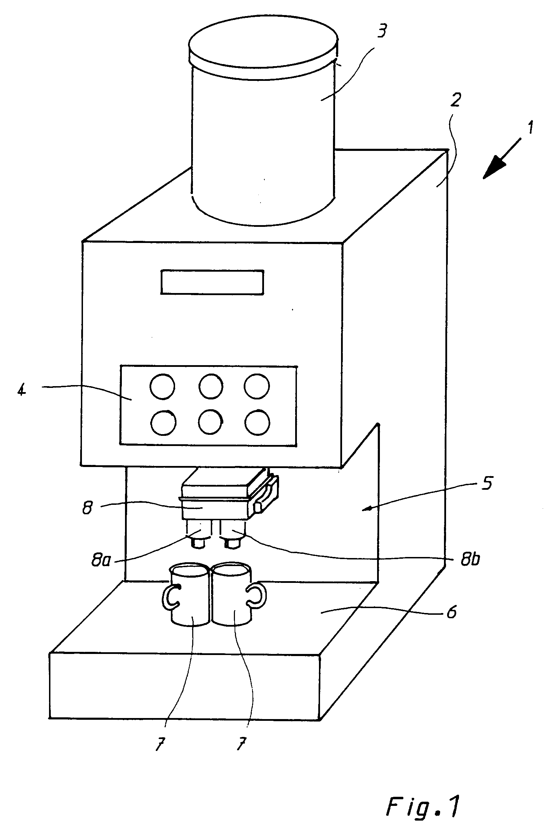

Fig. 1 zeigt eine Kaffeemaschine 1 mit integrierter Milchaufaschäumung zur Cappuccino-Bereitung in schematischer Darstellung. Die Kaffeemaschine 1 weist ein Gehäuse 2 mit einem aufgesetzten Kaffeebehälter 3, einer Bedienungstafel 4 und einem zurückversetzten Auslaßabteil 5 mit einer Standfläche 6 für mindestens zwei Tassen 7 auf. Oberhalb der Tassen 7 ist eine kompakte Auslaßeinheit 8 vorgesehen, die einen ersten Auslauf 8a und eine zweiten Auslauf 8b aufweist. Beide Ausläufe 8a, 8b weisen einen vorbestimmten Abstand zueinander auf, der einerseits groß genug ist, daß die beiden in Fig. 1 gezeichneten Tassen bequem untergestellt und gemeinsam, jeweils eine Tasse aus einem Auslauf, befüllt werden können. Andererseits sollte der Abstand zwischen den beiden Ausläufen 8a und 8b kleiner als der Durchmesser einer üblichen Kaffeetasse sein, so daß auch eine einzige Tasse, aus beiden Ausläufen gemeinsam, befüllt werden kann.

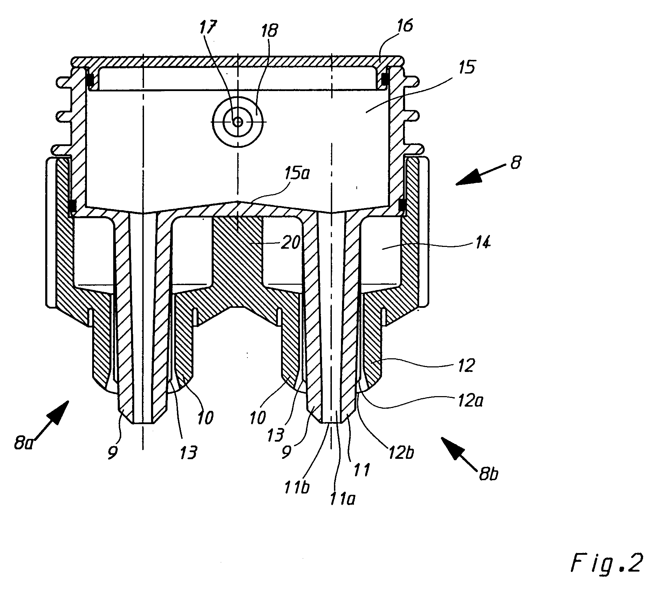

Wie die Fig. 2 bis 4 zeigen, enthält jeder Auslauf 8a, 8b der Auslaßeinheit 8 identisch einen Kaffeeauslauf 9 und einen Milchauslauf 10, durch die jeweils Kaffee und Milch bzw. Milchschaum gleichzeitig ausgegeben werden können. Der Kaffeeauslauf 9 enthält ein Rohr mit einem mittigen Durchlaßkanl 11a und einer Ausmündung 11b, die in der in Fig. 1 gezeichneten Stellung der Kaffeemaschine in einer horizontalen Ebene liegt.

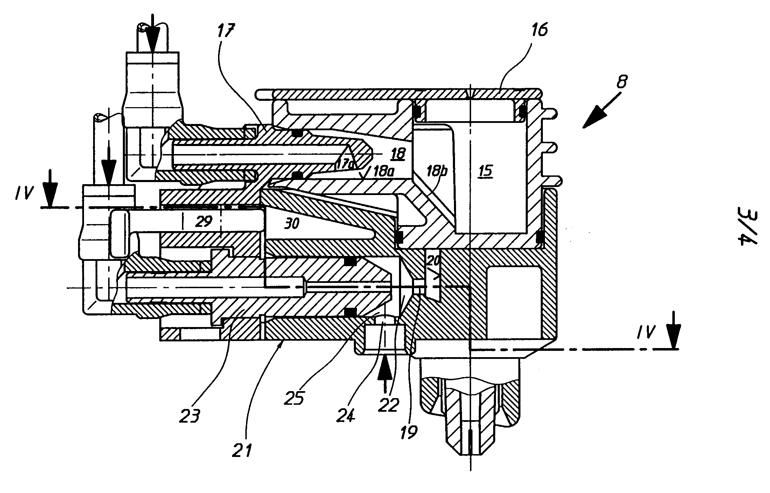

Jeder Milchauslauf 10 enthält ebenfalls ein Rohr 12 mit einem mittigen Durchgangskanal 12a und einer Ausmündung 12b, die, wie Fig. 3 zeigt, so gegenüber der Ausmündung 11b des Kaffeeauslaufs 9 schräg nach hinten oben geneigt ist, daß die dem Benutzer zugewandte vordere Kante des Rohrs 12 tiefer liegt als die abgewandte hintere Kante. Diese Anordnung kommt dem Benutzer entgegen, da dieser eher dazu neigt, die Tassen weiter vorn hinzustellen, als sie ganz nach hinten zu schieben.

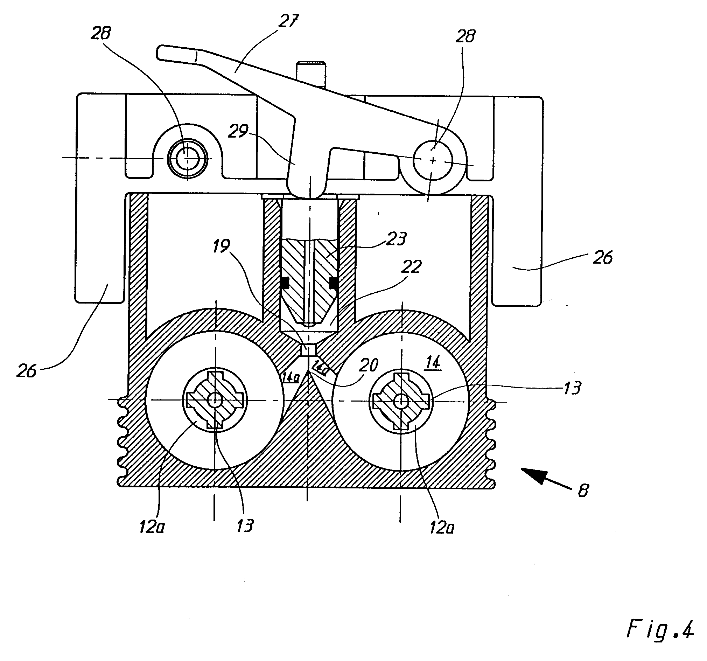

Das Rohr 11 jedes Kaffeeauslaufs 9 erstreckt sich koaxial innerhalb des Rohres 12 des jeweils zugeordneten Milchauslaufs 10, hat jedoch einen Außendurchmesser, der geringer ist als der Innendurchmesser des Rohres 12 des Milchauslaufs, so daß sich über die gesamte Länge des Rohres 12 zwischen beiden Rohren 11, 12 ein ringförmiger Durchlaßkanal 12a für Milch ausbildet. Die Breite des Durchlaßkanals 12a sollte, in Abstimmung mit einer akzeptablen Durchlaufzeit, möglichst klein sein, um einen besonders feinporigen und deshalb haltbaren Milchschaum zu erzeugen. Bevorzugt beträgt der Innendurchmesser des Rohres 12 13mm und der Außendurchmesser des Rohres 11 11,5 mm. Wie insbesondere in den Fig. 2 und 4 gezeigt, erstrecken sich in diesen ringförmigen Durchlaßkanal 12a am Rohr 11 angeordnete und in Umfangsrichtung verteilte Stege, die als Leitschaufeln dienen und dafür sorgen, daß der Milchfluß im ringförmigen Kanal 12a im wesentlichen axial verläuft, was die Neigung zum Spritzen herabsetzt. Im dargestellten Ausführungsbeispiel sind pro Auslauf vier Stege 13 mit rechteckigem Querschnitt vorgesehen, die Anzahl und Ausbildung kann jedoch verändert werden.

Fig. 2 zeigt weiterhin, daß das Rohr 11 des Kaffeeauslaufs 9 sich sowohl mit seiner Außen- als auch mit seiner Innenfläche in Richtung auf die Mündung 11b verjüngt, so daß einerseits der Kaffeestrahl gebündelt und andererseits der ringförmige Durchgangskanal 12a, da die Innenoberfläche des Rohres 12 zylindrisch oder ebenfalls leicht konisch verläuft, nach unten erweitert. Gleichermaßen vergrößert sich auch die radiale Höhe der Stege 13. Kurz vor der Mündung 12b vergrößert sich auch der an sich zylindrische Innendurchmesser des Rohres 12 leicht konisch nach außen.

Oberhalb des Rohrs 12 jedes Auslaufs 8a und 8b ist jeweils eine Emulgierkammer 14 gleicher Größe vorgesehen, die von einer kreisförmigen Außenwand umschlossen wird, einen wesentlich größeren Durchmesser als der ringförmige Durchgangskanal 12a aufweist und sich in diesen nach unten öffnet. Durch jede Emulgierkammer erstreckt sich das Rohr 11 nach oben, wo eine Kaffeeverteilkammer 15 angeordnet ist. Die Kaffeeverteilkammer 15 ist langoval ausgebildet, erstreckt sich über beide Emulgierkammern 14 und steht mit den Durchlaßkanälen 11a der Rohre 11 beider Ausläufe 8a und 8b in Verbindung. Die Kaffeeverteilkammer 15 wird von oben durch einen Deckel 16 abgeschlossen. Eine in Fig. 3 dargestellte Kaffee-Einlaßleitung 17 mündet in die Kaffeeverteilkammer 15 mittig zwischen den beiden Kaffeeausläufen 9. Der Boden 15a unterhalb der Kaffeeinlaßleitung 17 und zwischen den beiden Durchlaßkanälen 11a der Kaffeeausläufe 9 ist leicht erhöht und zeigt in Richtung auf die Durchlaßkanäle 11a ein leichtes Gefälle, das die Einleitung des Kaffees in die Durchlaßkanäle 11a erleichert. Wie insbesondere Fig. 3 zeigt, hat die Kaffee-Einlaßleitung 17 eine nach unten gerichtete Mündung 17a, die zunächst gegen eine Wand 18a einer Vorkammer 18 gerichtet ist, an die sich eine schräg nach unten zum Boden 15a verlaufende Rampe 18b anschließt. Auf diese Weise fließt der Kaffee strömungsberuhigt in die Kaffeeverteilkammer 15 und kann von dieser in gleichmäßigen Volumenströmen auf die Durchlaßkanäle 11a der beiden Ausläufe 8a, 8b verteilt werden.

Wie insbesondere die Fig. 3 und 4 zeigen, ist jede Emulgierkammer 14 über jeweils einen tangential einmündenden Kanal 14a mit einer gemeinsamen Einlaßöffnung 19 verbunden. Die Kanäle 14a beider Emulgierkammern laufen kurz vor der Eingangsöffnung 19 zusammen, so daß sich der Eingangsöffnung 19 axial ausgerichtet und im Abstand gegenüberliegend die Spitze eines als Verteiler ausgebildeten Prismas 20 befindet, die den durch die Einlaßöffnung 19 eintretenden Strom in zwei im wesentlichen gleiche Volumenströme aufteilt und diese tangential in den ringförmigen Innenraum der jeweils anliegenden Emulgierkammern leitet.

Die Einlaßöffnung 19 ist mit einer für beiden Emulgierkammern 14 gemeinsamen Mischeinrichtung 21 für Milch, Luft und Dampf verbunden. Die Mischeinrichtung 21 weist eine sich an die Einlaßöffnung anschließende Mischkammer 22 und eine Einspritzdüse 23 für ein Dampf/Luft-Gemisch auf, deren Düsenöffnung koaxial aber mit einem durch die Mischkammer 22 bestimmten Abstand zur Einlaßöffnung 19 angeordnet ist. In die Mischkammer 22 mündet weiterhin ein Milcheinlaß 24, der senkrecht zur Düsenöffnung der Einspritzdüse 23 ausgerichtet ist, so daß Milch, wie dies bei diesen Maschinen üblich ist, durch einen Venturieffekt in die Mischkammer 22 gesaugt wird. Der Venturieffekt wird im dargestellten Ausführungsbeispiel durch das aktive Einblasen von Luft durch eine nicht dargestellte Pumpe oder eine andere Druckquelle in die Einspritzdüse 23 erreicht, wobei sich die Luft bereits auf ihrem Weg mit dem Dampf gemischt hat, so daß durch die Düsenöffnung der Einspritzdüse 23 in die Mischkammer 22 ein Luft-Dampf-Gemisch gelangt, das sich dort mit der mitgerissenen Milch mischt. Eine Mischeinrichtung dieser Art ist beispielsweise aus der DE-A-44 45 436 bekannt, deren Offenbarungsgehalt hiermit durch Bezugnahme eingeschlossen wird. Es können jedoch andere geeignete Mischeinrichtungen verwendet werden.

Wie insbesondere die Fig. 2 und 3 zeigen, ist die Kaffeeverteilkammer 15 mit den beiden Rohren 11 des Kaffeeauslaufes, ihrem Boden 15a, der Rampe 18b und der Vorkammer 18 mit der Wand 18a einstückig aus Kunststoff gefertigt. Wie weiterhin ersichtlich, sind die beiden Emulgierkammern 14 mit ihren Rohren 12, dem Verteilerprisma 20, der Einlaßöffnung 19 und einer die Mischkammer 22 und die Milcheinlaßöffnung 24 enthaltenden Aufnahmebohrung 25 für die Einspritzdüse 23 ebenfalls einstückig aus Kunststoff gefertigt. Die beiden Teile werden zur Auslaßeinheit 8 zusammengesetzt, indem die Kaffeeverteilkammern in einen Raum oberhalb der Emulgierkammern 14 so eingesetzt wird, bis der Boden 15a auf dem Verteilerprisma 20, das gleichzeitig als Abstandshalter dient, aufsitzt. Das Verteilerprisma 20 ist so bemessen, daß sich eine ausreichende Größe der Emulgierkammer 14 ergibt, und die Mündungen 11b der Rohre 11 um einen vorbestimmten Abstand aus den Mündungen 12b der Rohre 12 nach unten herausragen. Dieser Abstand beträgt 3 bis 6mm, bevorzugt etwa 5mm, so daß die aus dem ringförmigen Durchgangskanal 12b austretende Milch die Kaffeeauslaufmündung 11b nicht verklebt.

Die Durchgangsbohrung 25 und die Vorkammer 18 sind weiterhin so ausgebildet, daß sie im lösbaren Preßsitz, abgedichtet durch die üblichen Dichtungen, über die Einspritzdüse 23 bzw. die Kaffee-Einlaßleitung 17 geschoben werden können bzw. von diesen abgezogen werden können und von diesen am korrekten Platz gehalten werden können, so daß die Auslaßeinheit 8 im ganzen nach Abziehen des Milchanschlusses von den entsprechenden Anschlußleitungen abgezogen und auf diese aufgeschoben werden kann, was das Reinigen sehr stark erleichtert.

Um das Auswerfen der Auslaßeinheit 8 zu erleichtern, ist ein Auswerferhebel 27 vorgesehen, der als einseitiger Hebel ausgebildet und um eine Führungsstange 28 am Gehäuse 2 der Kaffeemaschine 1 schwenkbar gelagert ist. Der Auswerferhebel 27 hat einen Drückerstab 29, mit dem er auf einen Führung 30 drücken kann, die an der Rückseite der Auslaßeinheit 8 angeordnet ist. Durch Drücken des Auswerfhebels 27 kann somit die Auslaßeinheit 8 leicht nach vorn abgezogen werden.

Die Auslaßeinheit 8 ist weiterhin in Höhenrichtung verstellbar, so daß der Abstand zwischen den Mündungen 11b und 12b und der daruntergestellten Tasse 7 verändert werden kann. Zu diesem Zweck ist die Auslaßeinheit 8 entlang zweier senkrecht verlaufender, paralleler Führungsstangen 28 vertikal, entweder manuell mit Hilfe von Handgriffen 26 oder durch einen geeigneten Antrieb, wie beispielsweise ein Ritzel und eine Gewindestange, verschiebbar.

Die erfindungsgemäße Kaffeemaschine 1 kann in allen für derartige Maschinen üblichen Funktionen betrieben werden. Soll nur schwarzer Kaffee bzw. Espresso ausgegeben werden, so wird die Milchzufuhr nicht betätigt, so daß nur Kaffee ausläuft. Die Kaffeemaschine kann weiterhin auch zum Ausgeben von heißer, nicht aufgeschäumter Milch verwendet werden, wenn eine entsprechend konstruierte Mischeinrichtung eingesetzt wird, bei der die Milch lediglich durch heißen Dampf angesaugt und dadurch erwärmt wird.

In Abwandlung des beschriebenen und gezeichneten Ausführungsbeispiels kann auch der einzige Kaffeeauslauf einer Kaffeemaschine mit deren einzigem Milchauslauf zur beschriebenen Auslaufeinheit zusammengefaßt werden, wobei dann gegebenenfalls die Kaffeeverteilkammer entfallen kann und der tangentiale Kanal der Emulgierkammer allein über die Einlaßöffnung mit der Mischkammer der Mischeinrichtung verbunden ist. Wie bereits erwähnt, kann die Mischeinrichtung für die erfindungsgemäße Kaffeemaschine unter den bekannten Konstruktionen ausgewählt werden. Die Trennung des Milchgemisches vor dem Aufschäumen in der Emulgierkammer ist auch für andere Kaffeemaschinen mit Doppelauslauf zweckmäßig. Ebenso können auch andere Kaffeemaschinen mit einer abnehmbaren und/oder höhenverstellbaren Auslaßeinheit versehen werden.

## Patentansprüche

1. Kaffeemaschine (1) mit integrierter Milchaufschäumung, mit einem Kaffeeauslauf (9) und einem Milchauslauf (10), die konstruktiv zu einer Auslaßeinheit (8) zusammengefaßt sind, **dadurch gekennzeichnet**, daß der Kaffeeauslauf (9) und der Milchauslauf (10) koaxial zueinander angeordnet sind, wobei der Milchauslauf (10) den Kaffeeauslauf (9) umgibt.

2. Kaffeemaschine nach Anspruch 1, **dadurch gekennzeichnet**, daß im Milchauslauf (10) sich axial erstreckende Stege (13) vorgesehen sind.

3. Kaffeemaschine nach Anspruch 1 oder 2, **dadurch gekennzeichnet**, daß der Kaffeeauslauf (9) unterhalb des Milchauslaufs (10) ausmündet.

4. Kaffeemaschine nach einem der Ansprüche 1 bis 3, **dadurch gekennzeichnet**, daß der Milchauslauf (10) eine sich schräg zur Vertikalen erstreckende Mündungsöffnung (12b) aufweist.

5. Kaffeemaschine nach einem der Ansprüche 1 bis 4, **dadurch gekennzeichnet**, daß die Auslaßeinheit (8) eine Emulgierkammer (14) zum Aufschäumen der Milch enthält, die mit einer Mischeinrichtung (21) zum Mischen von Luft, Dampf und Milch verbunden ist.

6. Kaffeemaschine nach einem der Ansprüche 1 bis 5, **dadurch gekennzeichnet**, daß sich der Kaffeeauslauf (9) axial durch die Emulgierkammer (14) erstreckt.

7. Kaffeemaschine nach einem der Ansprüche 1 bis 6, **dadurch gekennzeichnet**, daß die Auslaßeinheit (8) jeweils einen ersten und einen zweiten Milchauslaß (10) und einen ersten und einen zweiten Kaffeeauslaß (9) enthält.

8. Kaffeemaschine nach Anspruch 7, **dadurch gekennzeichnet**, daß die Auslaßeinheit (8) eine erste und eine zweite Emulgierkammer (14) enthält, wobei beide Emulgierkammern (14) mit einer gemeinsamen Mischeinrichtung (21) verbunden sind.

9. Kaffeemaschine nach Anspruch 8, **dadurch gekennzeichnet**, daß die Mischeinrichtung (21) über einen Verteiler (20), insbesondere ein Prisma, mit beiden Emulgierkammern (14) verbunden ist.

10. Kaffeemaschine nach einem der Ansprüche 7 bis 9, **dadurch gekennzeichnet**, daß die Auslaßeinheit (8) eine Kaffeeverteilkammer (15) enthält, die mit beiden Kaffeeausläufen (9) in Verbindung steht.

11. Kaffeemaschine nach Anspruch 10, **dadurch gekennzeichnet**, daß die Kaffeeverteilkammer (15) oberhalb der Emulgierkammern (14) angeordnet ist.

12. Kaffeemaschine nach einem der Ansprüche 1 bis 11, **dadurch gekennzeichnet**, daß die Auslaßeinheit (8) im Block abnehmbar an einem Gehäuse (2) der Kaffeemaschine (1) angeordnet ist.

13. Kaffeemaschine nach Anspruch 12, **dadurch gekennzeichnet**, daß eine Auswerfereinrichtung (27, 29) zum Auswerten der Auslaßeinheit (8) vorgesehen ist.

## Claims

1. A coffee machine (1) comprising an integrated milk foaming means, a coffee outlet (9) and a milk outlet (10) which are constructionally combined to form an outlet unit (8), **characterized in** that said coffee outlet (9) and said milk outlet (10) are coaxially arranged relative to each other, said milk outlet (20) surrounding said coffee outlet (9).

2. The coffee machine according to claim 1, **characterized in** that axially extending webs (13) are provided in said milk outlet (10).

3. The coffee machine according to claim 1 or 2, **characterized in** that said coffee outlet (9) terminates below said milk outlet (10).

4. The coffee machine according to any one of claims 1 to 3, **characterized in** that said milk outlet (10) comprises a terminating opening (12b) extending in a direction inclined to the vertical.

5. The coffee machine according to any one of claims 1 to 4, **characterized in** that said outlet unit (8) contains an emulsifying chamber (14) which is used for foaming milk and is connected to a mixing means (21) for mixing air, steam and milk.

6. The coffee machine according to any one of claims 1 to 5, **characterized in** that said coffee outlet (9) extends axially through said emulsifying chamber (14).

7. The coffee machine according to any one of claims 1 to 6, **characterized in** that said outlet unit (8) respectively contains a first and second milk outlet (10) and a first and second coffee outlet (9).

8. The coffee machine according to claim 7, **characterized in** that said outlet unit (8) contains a first and second emulsifying chamber (14), said two emulsifying chambers (14) being connected to a joint mixing means (21).

9. The coffee machine according to claim 8, **characterized in** that said mixing means (21) is connected via a distributor (20), in particular a prism, to said two emulsifying chambers (14).

10. The coffee machine according to any one of claims 7 to 9, **characterized in** that said outlet unit (8) comprises a coffee distributing chamber (15) which communicates with both of said coffee outlets (9).

11. The coffee machine according to claim 10, **characterized in** that said coffee distributing chamber (15) is arranged above said emulsifying chambers (14).

12. The coffee machine according to any one of claims 1 to 11, **characterized in** that said outlet unit (8) is arranged on a housing (2) of said coffee machine (1) to be removable in one block.

13. The coffee machine according to claim 12, **characterized in** that an ejector device (27, 29) is provided for ejecting said outlet unit (8).

## Revendications

1. Machine à café (1) avec un dispositif intégré pour faire mousser du lait, comportant une sortie de café (9) et une sortie de lait (10) qui sont réunies du point de vue de la construction en une unité de sortie (8), **caractérisée** en ce que la sortie de café (9) et la sortie de lait (10) sont disposées coaxialement l'une par rapport à l'autre, la sortie de lait (10) entourant la sortie de café (9).

2. Machine à café selon la revendication 1, **caractérisée** en ce que des nervures (13) s'étendant dans la direction axiale sont prévues dans la sortie de lait (10).

3. Machine à café selon la revendication 1 ou 2, **caractérisée** en ce que la sortie de café (9) débouche au-dessous de la sortie de lait (10).

4. Machine à café selon une des revendications 1 à 3, **caractérisée** en ce que la sortie de lait (10) présente un orifice (12b) qui s'étend en biais par rapport à la verticale.

5. Machine à café selon une des revendications 1 à 4, **caractérisée** en ce que l'unité de sortie (8) contient une chambre émulsionnante (14) destinée à faire mousser le lait et reliée à un dispositif de mélange (21) pour mélanger de l'air, de la vapeur et du lait.

6. Machine à café selon une des revendications 1 à 5, **caractérisée** en ce que la sortie de café (9) s'étend axialement à travers la chambre émulsionnante (14).

7. Machine à café selon une des revendications 1 à 6, **caractérisée** en ce que l'unité de sortie (8) comprend respectivement une première et une deuxième sorties de lait (10) et une première et une deuxième sorties de café (9).

8. Machine à café selon la revendication 7, **caractérisée** en ce que l'unité de sortie (8) comprend une première et une deuxième chambres émulsionnantes (14), les deux chambres émulsionnantes (14) étant reliées à un dispositif de mélange (21) commun.

9. Machine à café selon la revendication 8, **caractérisée** en ce que le dispositif de mélange (21) est relié aux deux chambres émulsionnantes (14) par l'intermédiaire d'un répartiteur (20), notamment d'un prisme.

10. Machine à café selon une des revendications 7 à 9, **caractérisée** en ce que l'unité de sortie (8) contient une chambre de répartition de café (15) qui communique avec les deux sorties de café (9).

11. Machine à café selon la revendication 10, **caractérisée** en ce que la chambre de répartition de café (15) est disposée au-dessus des chambres émulsionnantes (14).

12. Machine à café selon une des revendications 1 à 11, **caractérisée** en ce que l'unité de sortie (8) est disposée de façon à pouvoir être enlevée en bloc sur un boîtier (2) de la machine à café (1).

13. Machine à café selon la revendication 12, **caractérisée** en ce qu'un dispositif d'éjection (27, 29) est prévu pour éjecter l'unité de sortie (8).
